# EUROPEAN PATENT APPLICATION

(11) **EP 0 933 660 A1**
(43) Date of publication of application: **04.08.1999**
(21) Application number: 99101326.9
(22) Date of filing: 25.01.1999
(51) Int. Cl.: G02B 6/42

(54) **Optical transmitting-receiving waveguide module**

(30) Priority: 30.01.1998 JP 3230798
(71) Applicant: NEC CORPORATION, Tokyo (JP)
(72) Inventor: Kimura, Naoki, Minato-ku, Tokyo (JP)
(74) Representative: Glawe, Delfs, Moll & Partner

(57) **Abstract**

The optical waveguide transceiver module consists of a Y-branch optical waveguide (5) connected to an optical fiber (10) fixed in a v-groove (12), one branch (6) of the optical waveguide connected to a light emitting element (2) and the second branch (7) connected to a receiving light receiving element (9). The receiving photodiode (9) is formed integrally with a transmission monitoring light receiving element (8) which receives the emission from the back face of the light emitting element (2). The use of a combined light receiving element (3) reduces the size of the module. Preferably the light emitting element (2) is of the spot-size conversion type. In one embodiment a reflecting mirror (13) is used to reflect the light from the back face of the light emitting element (2) and the signal from the second branch (7) onto surface incidence type combined light receiving elements (3).

## Description

### FIELD OF THE INVENTION

This invention relates to an optical transmitting-receiving waveguide module that is applicable to the bidirectional communications, and more particularly to, an optical transmitting-receiving waveguide module with a built-in transmission-monitoring light-receiving element.

### BACKGROUND OF THE INVENTION

Conventional optical transmitting-receiving waveguide modules are, for example, described in 1997 IEICE Electronics Society Meeting C-3-6 (hereinafter referred to as 'prior art 1') and in Japanese patent application laid-open No.9-191152(1997) (hereinafter referred to as 'prior art 2').

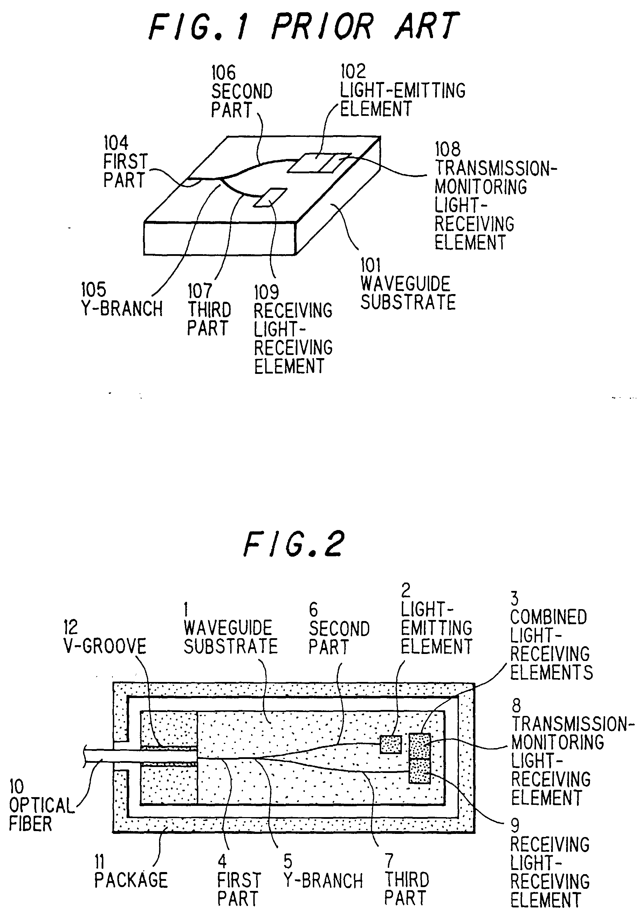

FIG.1 is a perspective view showing parts related with this invention in prior arts 1 and 2. In FIG.1, 101 is a waveguide substrate, 102 is a light-emitting element (e.g., a laser diode) installed on the waveguide substrate 101, 108 is a transmission-monitoring light-receiving element (e.g., a photodiode) installed on the waveguide substrate 101, 109 is a receiving light-receiving element (e.g., a photodiode) installed on the waveguide substrate 101, 104 is first part of waveguide formed on the waveguide substrate 101, 105 is a Y-branch of the waveguide, 106 is second part of the waveguide, and 107 is third part of the waveguide.

The end face of the first part 104 is optically connected with an optical fiber (not shown), and the light-emitting element 102 and the light-receiving elements 108, 109 each are provided with an electrode.

Light emitted from the light-emitting element 102 is sent through the waveguides 106, 105 and 104 to the optical fiber, and light from the optical fiber passes through the waveguides 104, 105 and 107 and then is converted into an electrical signal by the receiving light-receiving element 109. Light emitted from the back face of the light-emitting element 102 is received by the transmission-monitoring light-receiving element 108, used for the transmission monitoring.

The retails of the structure and operation of the module shown in FIG.1 are described in prior arts 1 and 2, and therefore its explanations are omitted herein. Meanwhile, in the composition disclosed in prior art 2, the light-emitting element 102, light-receiving elements 108, 109, waveguides 104, 105, 106 and 107 are all of core-layer structure, and the core layer is continuously formed in the propagation direction of light. However, the position arrangement of the respective elements in plan view is as shown in FIG.1.

The conventional modules in prior arts 1 and 2 have problems described below. Namely, since the receiving light-receiving element 109 and the transmission-monitoring light-receiving element 108 are installed lying side by side, such a sufficient interval between the two elements as to allow the installation is necessary. Therefore, the modules are hard to miniaturize.

Also, the number of process in the installation is increased, and therefore the manufacturing cost is difficult to reduce.

Further, in installing the three elements, the light-emitting element 102, receiving light-receiving element 109 and transmission-monitoring light-receiving element 108, it is necessary to provide three kinds of solders, whose fusion temperatures are different from one another. Namely, severe precision is required for the installation of optical element, and therefore it must be avoided that solder at already-installed element is softened due to the heat conduction in heating solder at second-or-later-installed element.

Meanwhile, this problem does not occur in the module disclosed in prior art 2 since both the light-emitting element and the light-receiving element are formed as the core-layer structure.

### SUMMARY OF THE INVENTION

Accordingly, it is an object of the invention to provide an optical transmitting-receiving waveguide module that is miniaturized and can provide reduced cost in manufacturing.

According to the invention, an optical transmitting-receiving waveguide module, comprising:
a groove which is formed on a waveguide substrate so as to fix the beginning end of an optical fiber;
first part of waveguide which is formed on the waveguide substrate so as to connect with an end face of the optical fiber in the waveguide substrate;
a Y-branch of waveguide to branch the first part of waveguide into second part of waveguide and third part of waveguide which are formed on the waveguide substrate;
a light-emitting element installed on the waveguide substrate; and
combined light-receiving elements that a receiving light-receiving element and a transmission-monitoring light-receiving element are integrally formed, the transmission-monitoring light-receiving element of the combined light-receiving elements being installed at a position to connect with light emitted from the back face of the light-emitting element;
   wherein the second part of waveguide extending from the Y-branch of waveguide has an end face positioned to connect with light emitted from the light-emitting surface of the light-emitting element, and the third part of waveguide extending from the Y-branch of waveguide has an end face positioned to connect with the light-receiving surface of the receiving light-receiving element of the combined light-receiving elements.

### BRIEF DESCRIPTION OF THE DRAWINGS

The invention will be explained in more detail in conjunction with the appended drawings, wherein:
FIG.1 is a perspective view showing the conventional optical transmitting-receiving waveguide module,
FIG.2 is a cross sectional view showing an optical transmitting-receiving waveguide module in a first preferred embodiment according to the invention,
FIG.3 is an enlarged perspective view showing a light-emitting element and combined light-receiving elements in FIG.2,
FIG.4 is a partial perspective view showing an optical transmitting-receiving waveguide module in a second preferred embodiment according to the invention,
FIG.5 is a cross sectional view showing an optical transmitting-receiving waveguide module in a third preferred embodiment according to the invention,
FIG.6 is an enlarged perspective view showing a light-emitting element and combined light-receiving elements in FIG.5, and
FIG.7 is a partial cross sectional and plan view showing an optical transmitting-receiving waveguide module in a fourth preferred embodiment according to the invention.

### DESCRIPTION OF THE PREFERRED EMBODIMENTS

The preferred embodiments of this invention will be explained below, referring to the drawings.

FIG.2 is a cross sectional view showing the first preferred embodiment of the invention. Meanwhile, in the drawings referred below, same or like parts are indicated by same reference numerals and bring out like operations, therefore its duplicated explanations will be omitted.

In FIG.2, 1 is an optical waveguide substrate, 2 is a light-emitting element installed on the waveguide substrate 1, and 3 is combined light-receiving elements, where a transmission-monitoring light-receiving element 8 and a receiving light-receiving element 9 are formed integrally. On the waveguide substrate 1, there is formed a waveguide, where 4 is first part of the waveguide, 5 is a Y-branch of the waveguide, 6 is second part of the waveguide and 7 is third part of the waveguide.

10 is an optical fiber, 11 is a package and 12 is a V-groove formed on the waveguide substrate 1 by which the axis of the optical fiber 10 is fixed.

The optical fiber 10 is installed positioned by the V-groove 12 without requiring its optical axis adjustment. The light-emitting element 2 is installed so as to connect with the second part 6 of the waveguide, and is desirably a spot size conversion type light-emitting element which allows the connection loss to be reduced. The combined light-receiving elements 3 are so installed that the transmission-monitoring light-receiving element 8 can connect with light emitted from the back face of the light-emitting element 2.

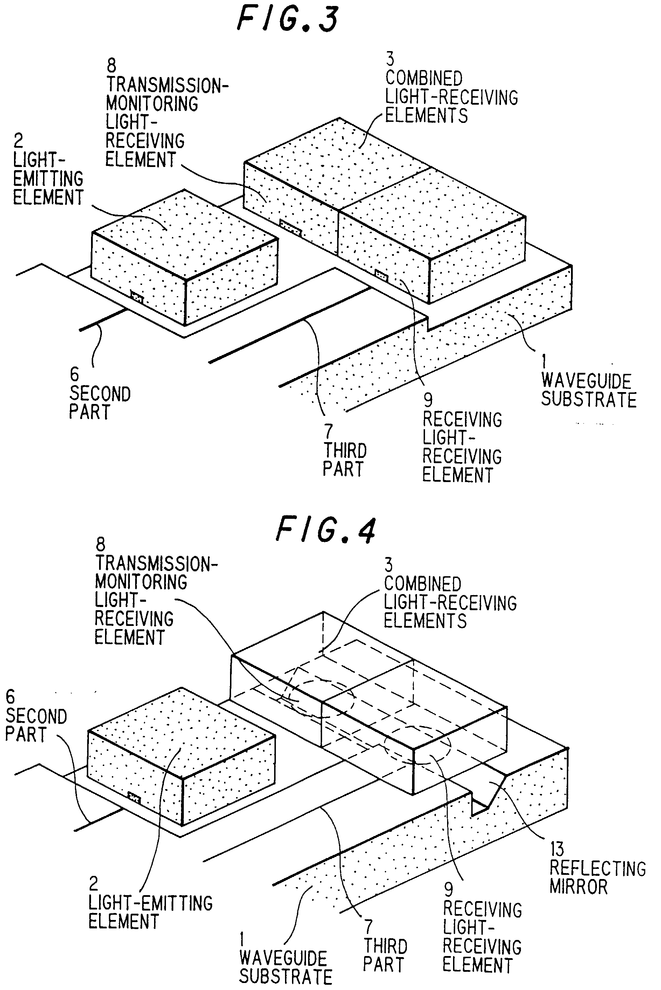

FIG.3 is an enlarged perspective view showing the installation state of the light-emitting element 2 and the combined light-receiving elements 3 in FIG.2. Used in the example shown in FIG.3 is an end face incidence type light-receiving element that can provide the simple structure to optically connect with the end face of the third part 7 of the waveguide. Alternatively, a waveguide incidence type light-receiving element that can provide the simple structure may be used.

Transmission signal light emitted from the front end face of the light-emitting element 2 is connected through the waveguides 6, 5 and 4 to the optical fiber 10, and is thereby sent to a transmission line. Light emitted from the back face of the light-receiving element 2 is supplied to the transmission-monitoring light-receiving element 8, where the optical output of the light-receiving element 2 is monitored.

Reception signal light sent through the transmission line is supplied from the optical fiber 10 through the waveguides 4, 5 and 7 to the receiving light-receiving element 9, converted into an electrical signal.

FIG.4 is a perspective view showing the second preferred embodiment of the invention, where only part corresponding to FIG.3 in the module is shown. The other part is like that of the first embodiment in FIG.2.

In this embodiment shown in FIG.4, both the transmission-monitoring light-receiving element 8 and the receiving light-receiving element 9 employ a surface incidence type light-receiving element. Also, in FIG.4, numeral 13 is a reflecting mirror. The reflecting mirror 13 is composed such that light emitted from the end face of the third part 7 of the waveguide is reflected by the reflecting mirror 13, supplied to the surface incidence type light-receiving element 9, and such that light emitted from the back face of the light-emitting element 2 is reflected by the reflecting mirror 13, supplied to the surface incidence type light-receiving element 8.

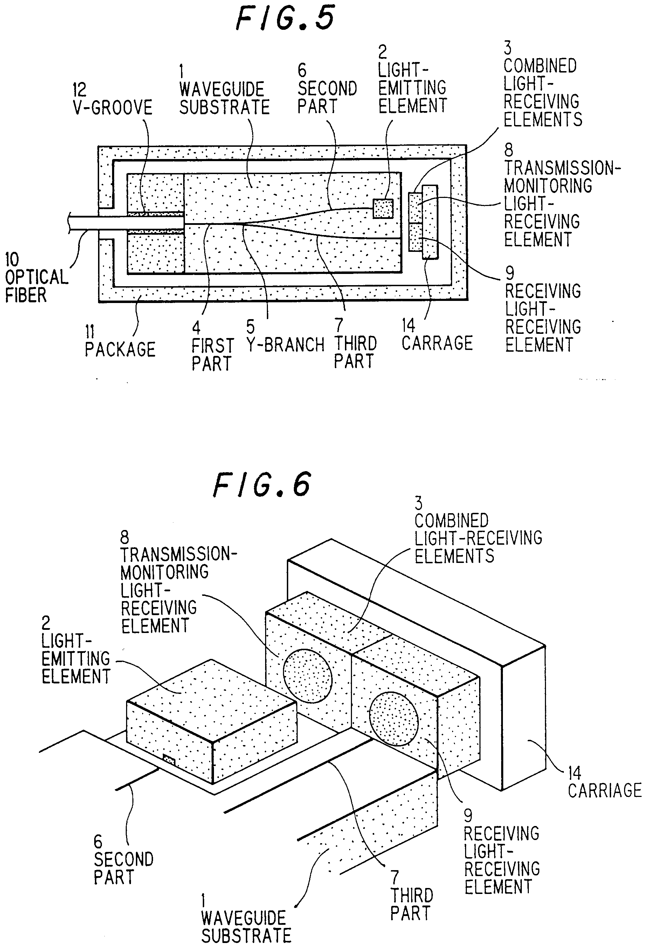

FIG.5 is a cross sectional view showing the third preferred embodiment of the invention. 14 is a carriage on which the combined light-receiving elements are mounted. FIG.6 is an enlarged perspective view showing the light-emitting element 2 and the combined light-receiving elements 3 in FIG.5.

In this embodiment, the combined light-receiving elements 3 are mounted not on the waveguide substrate 1 but on the separately-provided carriage 14 by solder bonding etc. Directing the light-receiving face of the combined light-receiving elements to the waveguide substrate 1, the carriage 14 is positioned such that light emitted from the end face of the third part 7 of the waveguide is received by the light-receiving face of the receiving light-receiving element 9 and such that light emitted from the back face of the light-emitting element 2 is received by the light-receiving face of the transmission-monitoring light-receiving element 8.

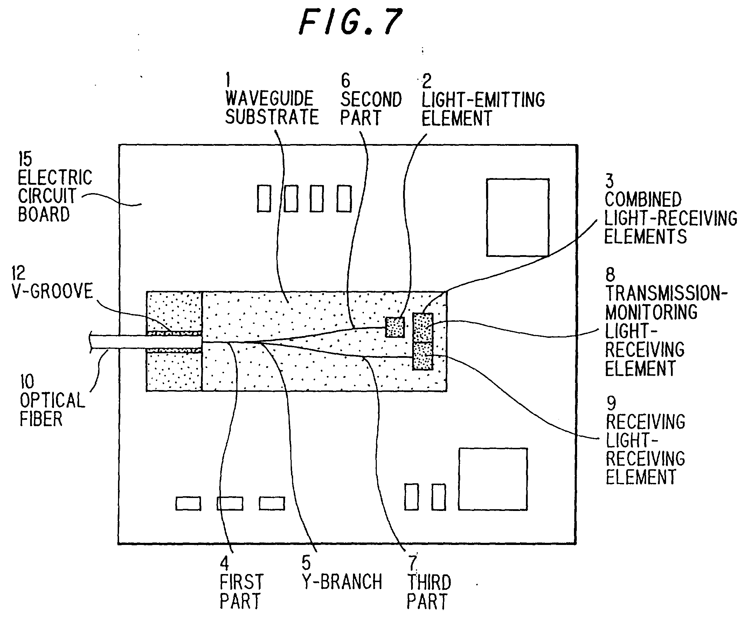

FIG.7 is a partial cross sectional and plan view showing the fourth preferred embodiment of the invention. 15 is an electric circuit board. The optical transmitting-receiving waveguide module may be installed on the electric circuit board 15, instead of being contained in the package 11.

### Advantages of the Invention:

The first advantage of the invention is that the optical transmitting-receiving waveguide module can be sufficiently miniaturized. This is because the interval between the transmission-monitoring light-receiving element 8 and the receiving light-receiving element 9 is minimized by using the combined light-receiving elements 3, therefore, the interval between the light-emitting element 2 and the receiving light-receiving element 9 can be minimized, thereby shortening the Y-branch of the waveguide as minimum as possible.

The second advantage of the invention is that the installation cost of light-receiving element in the manufacturing process of the optical transmitting-receiving waveguide module can be reduced. This is because, whereas, in the conventional modules, two of the transmission-monitoring light-receiving element and the receiving light-receiving element have been installed, one body of the combined light-receiving elements only has to be installed in this invention.

Although the invention has been described with respect to specific embodiment for complete and clear disclosure, the appended claims are not to be thus limited but are to be construed as embodying all modification and alternative constructions that may be occurred to one skilled in the art which fairly fall within the basic teaching here is set forth.

## Claims

1. An optical transmitting-receiving waveguide module, comprising:
a groove which is formed on a waveguide substrate so as to fix the beginning end of an optical fiber;
first part of waveguide which is formed on said waveguide substrate so as to connect with an end face of said optical fiber in said waveguide substrate;
a Y-branch of waveguide to branch said first part of waveguide into second part of waveguide and third part of waveguide which are formed on said waveguide substrate;
a light-emitting element installed on said waveguide substrate; and
combined light-receiving elements that a receiving light-receiving element and a transmission-monitoring light-receiving element are integrally formed, said transmission-monitoring light-receiving element of said combined light-receiving elements being installed at a position to connect with light emitted from the back face of said light-emitting element;
wherein said second part of waveguide extending from said Y-branch of waveguide has an end face positioned to connect with light emitted from the light-emitting surface of said light-emitting element, and said third part of waveguide extending from said Y-branch of waveguide has an end face positioned to connect with the light-receiving surface of said receiving light-receiving element of said combined light-receiving elements.

2. An optical transmitting-receiving waveguide module, according to claim 1, wherein:
said light-emitting element is a spot size conversion type light-emitting element.

3. An optical transmitting-receiving waveguide module, according to claim 1, wherein:
said combined light-receiving elements are a waveguide incidence type light-receiving element or a end face incidence type light-receiving element.

4. An optical transmitting-receiving waveguide module, according to claim 1, wherein:
said combined light-receiving elements are a surface incidence type light-receiving element, and said waveguide substrate is provided with a reflecting mirror installed such that light emitted from the end face of said third part of waveguide is reflected by said reflecting mirror and then supplied to said surface incidence type receiving light-receiving element and such that light emitted from the back face of said light-emitting element is reflected by said reflecting mirror and then supplied to said surface incidence type transmission-monitoring light-receiving element.

5. An optical transmitting-receiving waveguide module, according to claim 1, further comprising:
a carriage to surmount said combined light-receiving elements.

6. An optical transmitting-receiving waveguide module, according to claim 1, further comprising:
a package to contain said optical transmitting-receiving waveguide module.

7. An optical transmitting-receiving waveguide module, according to claim 1, further comprising:
an electric circuit board to surmount said optical transmitting-receiving waveguide module.
